# EUROPÄISCHE PATENTSCHRIFT

(11) **EP 0 441 999 B1**
(45) Veröffentlichungstag und Bekanntmachung des Hinweises auf die Patenterteilung: **04.05.1994**
(21) Anmeldenummer: 90102781.3
(22) Anmeldetag: 13.02.1990
(51) Int. Cl.: F22B 37/78, G01F 23/24, G01F 25/00

(54) **Einrichtung zur Überwachung des Wasserstands eines Kessels**
Installation to monitor water level in a boiler
Installation pour surveiller le niveau de l'eau dans une chaudière

(43) Veröffentlichungstag der Anmeldung: 21.08.1991
(73) Patentinhaber: EISENWERK THEODOR LOOS GMBH, D-91710 Gunzenhausen (DE)
(72) Erfinder: Mannhart, Christian, CH-4451 Wintersingen (CH); Loos, Jochen, D-8820 Gunzenhausen (DE)
(74) Vertreter: Hafner, Dieter, Dr.rer.nat., Dipl.-Phys.

(56) Entgegenhaltungen:
- DE-A- 3 013 019
- GB-A- 1 599 697
- US-A- 4 383 544

## Beschreibung

Die vorliegende Erfindung betrifft eine Einrichtung zur Überwachung des Wasserstands eines Kessels gemäß dem Oberbegriff des Patentanspruchs 1. Daneben betrifft die vorliegende Erfindung weiterhin einen Kessel unter Verwendung der eingangs genannten Einrichtung sowie ein Verfahren zur Überprüfung der Funktion von Wasserstandsensoren einer Einrichtung zur Überwachung des Wasserstands eines Kessels.

Ein Kessel zur Erzeugung von Dampf-, Heiß- oder Warmwasser besitzt ein Wasserreservoir, welches eine bestimmte Soll-Füllhöhe besitzen soll. Diese Soll-Füllhöhe wird mittels Wasserstandsensoren automatisch überwacht, welche im Fall des Verlustes des Kontakts mit Wasser ein Signal erzeugen. Regelmäßig wird die Soll-Füllhöhe bzw. der Soll-Füllhöhenbereich über eine Mehrzahl von Wasserstandsensoren erfaßt und geregelt. Aus sicherheitstechnischen Gründen schreiben einzelne Behörden eine regelmäßige Überprüfung dieser Wasserstandsensoren vor.

Eine Einrichtung der gattungsgemäßen Art ist bereits in der DE-A-30 13 019 beschrieben. Diese bekannte Einrichtung umfaßt ein Gehäuse, welches sich im Wasserreservoir eines Kessels befindet und in seinem Inneren einen Wasserstandsensor aufweist. Das Gehäuse weist eine Durchtrittsöffnung auf, damit sich die Wasserstände im Wasserreservoir sowie dem Gehäuse einander angleichen können. Zur Überprüfung des Wasserstandsensors, d.h. zu seiner Freilegung weist die bekannte Einrichtung eine Zuführung auf, über die bei Bedarf Druckluft dem Inneren des Gehäuses zugeführt wird, wodurch eine druckbedingte Absenkung des Wasserstands innerhalb des Gehäuses soweit erfolgt, bis der Wasserstandsensor freigelegt ist und in seiner Funktion überprüft werden kann. Diese Technik erweist sich jedoch in der Praxis als äußerst aufwendig, da auf der einen Seite teuere Gase (z.B. Stickstoff) bereitgestellt werden müssen, zum anderen ein hoher apparativer Aufwand an Ventilen, Leitungen, Dichtungen etc. verursacht wird.

Die Aufgabe der vorliegenden Erfindung besteht darin, eine Einrichtung zur Überwachung des Wasserstands eines Kessels zu schaffen, welche eine Überprüfung der Wasserstandsensoren während des Betriebs des Kessels unter Vermeidung des Einpressens eines Gases ermöglicht und darüber hinaus in besonders einfacher und kostengünstiger Weise herstellbar sein soll. Zudem soll die Einrichtung unter geringem Kostenaufwand in bereits bestehenden Anlagen nachrüstbar sein.

Obige Aufgabe wird bei der gattungsgemäßen Einrichtung erfindungsgemäß dadurch gelöst, daß eine Ableitung vorgesehen ist, welche eine Entfernung des im Gehäuse befindlichen Wassers in einen außerhalb des Kessels befindlichen Raum bis zur Freilegung des an der tiefsten Stelle positionierten Sensors erlaubt. Es wurde herausgefunden, daß durch den Einsatz einer Ableitung bedingt durch die herrschende Druckdifferenz des Innenraums des Kessel bzw. des Gehäuses der Einrichtung zur Außenseite (z. B. Atmosphäre) das im Gehäuse befindliche Wasser durch das Entnahmerohr hindurch selbstständig in einen außerhalb des Kessels befindlichen Raum fließt mit der Folge, daß der Wasserstand innerhalb des Gehäuses der Einrichtung im Vergleich zum Wasserstand des Kessels absinkt, so daß sämtliche Wasserstandsensoren freigelegt werden. Die Absenkung des Wasserstands im Gehäuse erfolgt sehr schnell im Vergleich zum Absenken des gesamten Kesselwasserstands. Die Notwendigkeit des Einpressens von Stickstoffgas oder dergleichen entfällt. Dennoch können sämtliche Wasserstandelektroden auch während des Betriebs geprüft werden, ein Abschalten ist nicht erforderlich. Die Erfindung hat den Vorteil, daß sie für einen Bruchteil der bisher notwendigen Kosten auch bei bereits bestehenden Kesselanlagen eingesetzt werden kann, d. h. eine Nachrüstung möglich ist. Es ist lediglich erforderlich das Innere des Gehäuses über eine Ableitung mit einem Raum niedrigeren Drucks zu verbinden.

Zweckmäßigerweise ist das Entnahmerohr absperrbar ausgebildet. Hierdurch wird gewährleistet, daß innerhalb des Entnahmerohrs im geschlossenen Zustand vorerst der innerhalb des Kessel bzw. innerhalb des Gehäuses vorherrschende Druck anliegt, so daß der herrschende Druckgradient zur Ableitung des Wassers und somit zur Absenkung des Wasserspiegels innerhalb des Gehäuses der Einrichtung voll ausgenützt werden kann.

Eine exakte Beeinflussung des Wasserstands innerhalb des Gehäuses läßt sich dadurch erzielen, daß die Absperrung fein regulierbar ist.

Gemäß einer weiteren Ausgestaltung der erfindungsgemäßen Einrichtung ist das Entnahmerohr innerhalb des Gehäuses vorgesehen.

Dieses Entnahmerohr ist zweckmäßigerweise mit einem außerhalb des Gehäuses befindlichen Absperrventil verbunden, dessen Betätigung die Absenkung des Wasserstands innerhalb des Gehäuses gewährleistet.

Gemäß einer weiteren zweckmäßigen Ausgestaltung ist vorgesehen, daß das Entnahmerohr an der außerhalb des Kessels befindlichen Oberseite des Gehäuses befestigt ist. Zur Montage des Entnahmerohrs ist es hierbei lediglich notwendig, eine Bohrung im Deckel vorzusehen und das Entnahmerohr entweder lösbar (beispielsweise durch Verschraubung) oder unlösbar (beispielsweise durch Verschweißung) mit dem Gehäusedeckel zu verbinden. Das Nachrüsten ist sehr einfach und verursacht im Vergleich zum Stand der Technik nur einen Bruchteil der Kosten.

Zweckmäßigerweise ist an der Oberseite des Kessels ein abnehmbarer Deckel vorgesehen, an dem die Sensoren und das Entnahmerohr befestigt sind. Dies ist insbesondere vorteilhaft bei Einsatz von mechanischen Sensoren, welche öfters ausgetauscht bzw. kontrolliert werden müssen. Die Einrichtung kann hierbei durch Abnahme des Deckels in einfacher Weise geöffnet werden und die Sensoren ausgetauscht werden.

Gemäß einer weiteren zweckmäßigen Ausgestaltung der erfindungsgemäßen Einrichtung ist das untere, im Wasserraum befindliche Ende des Behälters abgeschrägt oder trichterförmig ausgebildet. Die Anordnung der Sensoren sowie des Entnahmerohrs können entsprechend der Abschrägung des unteren Endes des Gehäuses angeordnet sein. Diese Ausgestaltung besitzt den Vorteil, daß innerhalb des Gehäuses befindliche Schmutzpartikel an der untersten Stelle des Behälters gesammelt und über das Kesselwasser abgeführt werden können.

Zur Unterstützung der Ableitung des Wassers und der hierdurch begründeten Absenkung des Wasserstands innerhalb des Gehäuses kann gemaß einer weiteren Ausgestaltung der vorliegenden Erfindung die Ableitung bzw. das Entnahmerohr mit einer Saugeinrichtung verbunden sein.

Zweckmäßigerweise können auch pro Gehäuse mehrere Entnahmerohre vorgesehen sein.

Die vorliegende Erfindung betrifft ferner ein Verfahren zur Überprüfung der Funktion der Wasserstandsensoren einer Einrichtung zur Überwachung des Wasserstands eines Kessels. Dieses Verfahren ist dadurch gekennzeichnet, daß über eine Ableitung oder ein Entnahmerohr, deren, bzw. dessen untere Öffnung unterhalb der Position des untersten Sensors angeordnet ist, eine Verbindung mit einem Raum mit geringerem Druck hergestellt wird, wodurch Wasser in die Ableitung bzw. das Entnahmerohr aufsteigt und der Wasserspiegel in dem gehäuse der Einrichtung sich im Vergleich zum Wasserspiegel im Wasserreservoir senkt, bis der unterste Sensor sich nicht mehr unter Wasser befindet, anschließend die Funktionsfähigkeit des Sensors bzw. der Sensoren unter Verwendung bekannter Maßnahmen geprüft wird sowie darauffolgend die Verbindung geschlossen wird, woraufhin der aktuelle Wasserspiegel im gehäuse der Einrichtung im Gehäuse wieder auf den im Kessel vorherrschenden Wasserspiegel übergeht.

Zweckmäßigerweise erfolgt die Öffnung bzw. das Schließen der Verbindung manuell oder automatisch unter Verwendung einer Zeitsteuerung.

Schließlich betrifft die vorliegende Erfindung einen Kessel zur Erzeugung von Dampf, Heiß-, oder Warmwasser mit einer Feuerung oder Elektrobeheizung oder Abgasbeheizung, einem Wärmetauscher zur Übertragung der thermischen Energie des Rauchgases auf das Wasser sowie ein Wasserreservoir. Der Kessel ist gemäß der Erfindung gekennzeichnet durch eine Einrichtung zur Überwachung des Wasserstands im Wasserreservoir gemäß mindestens einem der Ansprüche 1 - 12.

Im folgenden wird eine zweckmäßige Ausgestaltung der Erfindung anhand der Zeichnungen näher erläutert. Es zeigen:
- Fig. 1: eine stark vereinfachte, schematische Darstellung eines Dampfkesselskessels;
- Fig. 2: eine vergrößerte Darstellung der erfindungsgemäßen Einrichtung zur Überwachung des Wasserstands des Kessel gemäß Fig. 1 während des normalen Betriebs;
- Fig. 3: eine vergrößerte Darstellung der Einrichtung gemäß Fig. 2 jedoch unter Verwendung einer außerhalb des Gehäuses befindlichen Ableitung;
- Fig. 4: die Einrichtung gemäß Fig. 2 mit abgesenktem Wasserstand innerhalb der Einrichtung zur Überprüfung der Wasserstandsensoren; und
- Fig. 5: die Einrichtung gemäß Fig. 3 mit abgesenktem Wasserstand innerhalb der Einrichtung zur Überprüfung der Wasserstandsensoren.

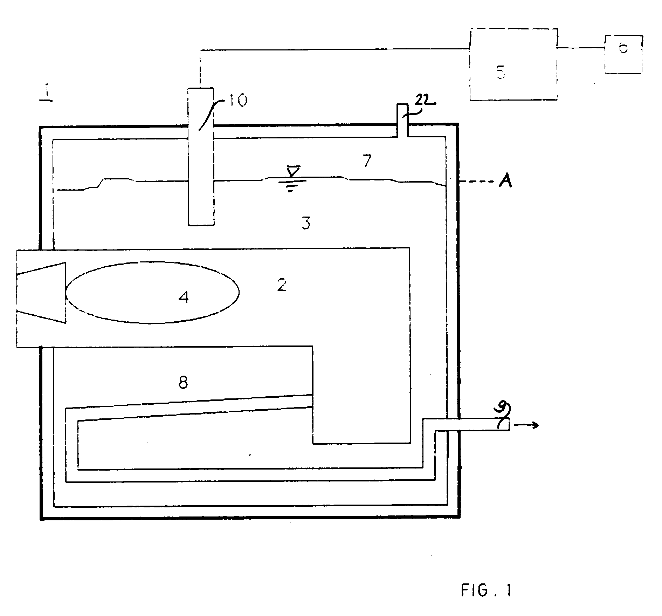

Bezugszeichen 1 in Fig. 1 bezeichnet einen Dampfkessel, beispielsweise einen abgasbeheizten Dampferzeuger oder dergleichen. Der Dampfkessel umfasst einen Brennraum 2, in dem eine Flamme 4 erzeugt wird. Die hierbei erzeugten, heißen Abgase werden über einen Wärmetauscher 8 beispielsweise in Form eines Ringspalttauschers durch das Wasserreservoir 7 geleitet und geben ihre Wärme an das angrenzende Wasser 3 ab.

Die Abgase verlassen den Kessel am Ausgang 9. Der Dampf verläßt den Kessel 1 am Ausgang 22.

Innerhalb des Kessel herrscht ein bestimmter Wasserstand, welcher in Fig. 1 mit A gekennzeichnet ist.

Zur Überprüfung dieses Wasserstands ist eine Einrichtung 10 vorgesehen, welche Wasserstandsensoren z. B. in Form von Wasserstandelektroden, Schwingkörper etc. zur Bestimmung des jeweiligen Wasserstands aufweist, welche mit einer außerhalb des Kessels befindlichen Steuerung 5 verbunden sind. In Abhängigkeit der von den Wasserstandelektroden 12 - 14 ermittelten Wasserstände, wird über eine Pumpe 6 dem Kessel Wasser zugeführt oder ggf. Wasser abgelassen.

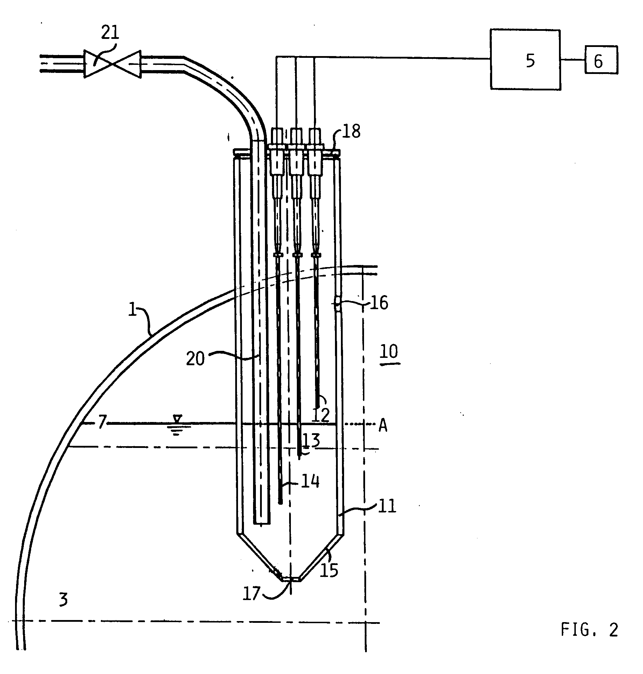

Fig. 2 zeigt eine vergrößerte Darstellung der Einrichtung 10 zur Überwachung des Wasserstands. Die Einrichtung 10 umfaßt ein hülsenartiges Gehäuse 11, welches an dessen Ober- sowie Unterseite jeweils mit einem Deckel 18 bzw. 15 abgeschlossen ist.

Fest mit dem Deckel 18 verbunden sind 3 Sensoren in Form von Wasserstandelektroden 12, 13 sowie 14, welche zur Bildung eines Wasserstand-Sollbereichs zur Gewährleistung der Regelung des Wasserstands in unterschiedlichen Höhen angeordnet sind. Die Wasserstandelektroden 12 - 14 erzeugen für den Fall der Absenkung des Wasserstands innerhalb der Einrichtung 10 unter die jeweilige Elektrode ein Signal, welches an eine außerhalb des Kessels 1 befindliche Steuerung 5 weitergeleitet wird. Die Steuerung 5 steht mit der Pumpe 6 in Verbindung, welche dem Kessel 1 bei Bedarf Wasser zuführt.

Das Gehäuse 11 der Einrichtung 10 weist an dessen Unterseite eine Öffnung 17 auf, welches das Innere der Einrichtung 10 mit dem Wasserreservoir 3 des Kessels 1 verbindet. Desweiteren befindet sich an der Oberseite des Gehäuses 11 der Einrichtung 10 eine weitere Öffnung 16, die eine Verbindung des Dampfraums mit dem Inneren der Einrichtung 10 gewährleistet.

Das untere Ende der Einrichtung 10 ist mit einem Deckel 15 verschlossen.

Die Einrichtung 10 umfasst desweiteren ein Entnahmerohr 20, welches ebenfalls im Deckel 18 befestigt ist und dessen unteres Ende unterhalb der Position der untersten Wasserstandelektrode 14 angeordnet ist.

Das Entnahmerohr 20 ist mit einer Ableitung verbunden, in welcher ein Feinregulierventil 21 vorgesehen ist.

Aufgrund des im Vergleich zur Außenseite des Kessels innerhalb des Kessels 1 vorherrschenden höheren Drucks wird durch Öffnung des Feinregulierventils 21 das in der Einrichtung 10 befindliche Wasser abgeleitet, wodurch die einzelnen Wasserstandelektroden 12 - 14 nach und nach freigelegt werden und deren Funktion hierbei überprüft werden kann.

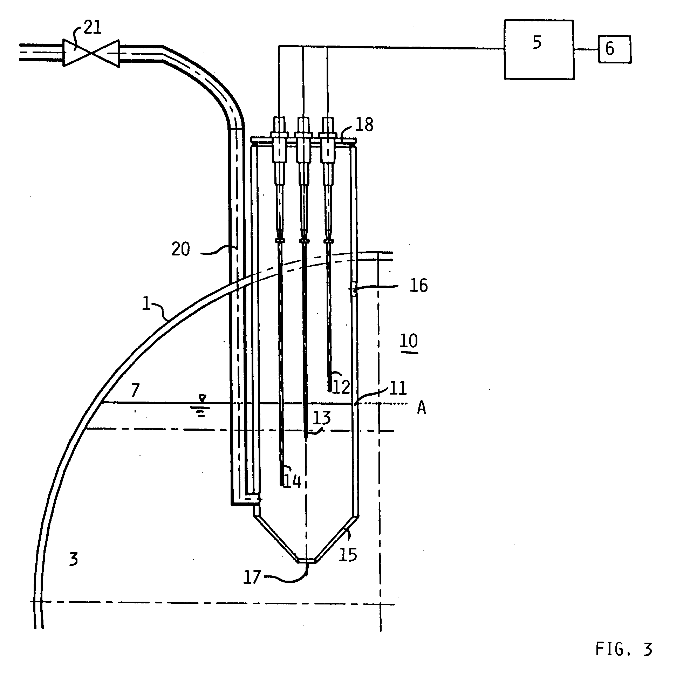

Bei der in Fig. 3 dargestellten Ausgestaltung der vorliegenden Erfindung ist das Entnahmerohr 20 nicht innerhalb des Gehäuses 11 sondern außerhalb, d. h. im Wasserreservoir 7 bzw. Dampfraum des Kessel 1 angeordnet.

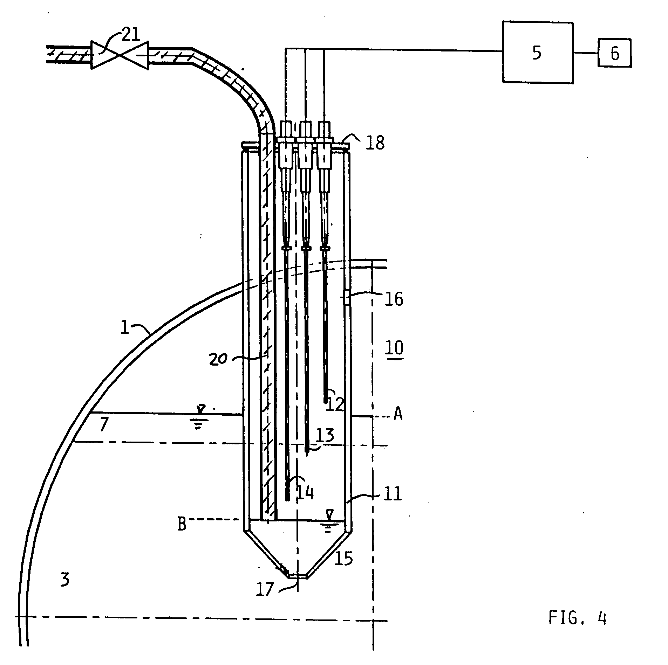

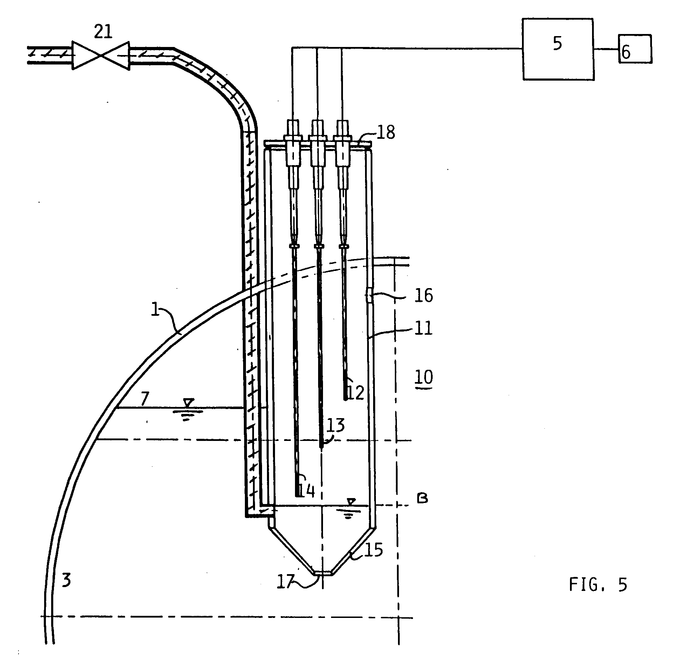

Wie in Fig. 4 bzw. Fig. 5 dargestellt, läßt sich der Wasserstand B innerhalb der Einrichtung 10 im Vergleich zum Wasserstand A im Wasserreservoir 7 des Kessels 1 maximal bis zum unteren Ende des Entnahmerohrs 20 absenken.

Die Dimensionierung des Entnahmerohrs 20 sowie der Durchtrittsöffnungen 16 sowie 17 muß so vorgenommen werden, daß die Absenkung des Wasserstands B zum Wasserstand A möglichst schnell erfolgt.

Die Überprüfung der Funktion der Wasserstandelektroden 12 - 14 erfolgt dadurch, daß das Absperrventil 21 geöffnet wird. Das Wasser steigt aufgrund der Druckdifferenz in das Entnahmerohr auf, wodurch sich der Wasserstand innerhalb der Einrichtung 10 senkt. Die Funktion der in der Einrichtung 10 befindlichen Wasserstandelektroden 12 - 14 ist daraufhin ersichtlich, sobald sie den Kontakt zu Wasser verlieren. In diesem Fall muß eine Signalgabe erfolgen. Anschließend wird das Absperrventil 21 geschlossen, woraufhin der aktuelle Wasserspiegel B innerhalb der Einrichtung 10 wieder in den im Kessel 11 vorherrschenden Wasserspiegel A übergeht.

Die Öffnung oder Schließung des Absperrventils erfolgt zweckmäßigerweise von Hand oder automatisch.

Die Erfindung gewährleistet eine sehr einfache und darüber hinaus kostengünstige Methode der Überprüfung der Funktion von Wasserstandeinrichtungen eines Kessels ohne daß der gesamte Kesselwasserstand abgesenkt werden müßte. Desweiteren bietet die Erfindung den Vorteil, daß bereits bestehende Anlagen problemlos und unter vergleichsweise geringem Kostenaufwand nachrüstbar sind. Alles in allem stellt die Erfindung auf dem technischen Gebiet des Kesselbaus eine ganz besondere Bereicherung dar.

### BEZUGSZEICHENLISTE

- 1: Kessel
- 2: Brennraum
- 3: Wasser
- 4: Flamme
- 5: Kesselsteuerung
- 6: Pumpe
- 7: Wasserreservoir
- 8: Wärmetauscher
- 9: Ausgang
- 10: Einrichtung zur Überwachung des Wasserstands
- 11: Gehäuse
- 12: Wasserstandelektrode
- 13: Wasserstandelektrode
- 14: Wasserstandelektrode
- 15: Deckel
- 16: Durchtrittsöffnung
- 17: Durchtrittsöffnung
- 18: Deckel/Oberseite
- 20: Entnahmerohr
- 21: Feinregulierventil
- 19: Ausgang

## Patentansprüche

1. Einrichtung zur Überwachung des Wasserstands eines Kessels mit einem Gehäuse, welches im Wasserreservoir des Kessels anzuordnen ist und mindestens eine Durchtrittsöffnung aufweist, mit mehreren im Gehäuse in unterschiedlicher Höhe innerhalb des Gehäuses angeordneter, wasserempfindlicher Sensoren, welche mit einer Steuerung in Verbindung stehen,
**dadurch gekennzeichnet,**
daß ein Entnahmerohr (20), dessen untere Öffnung unterhalb der Position des untersten Sensors (14) sich befindet, vorgesehen ist und welches eine Entfernung des im Gehäuse (11) befindlichen Wassers in einen außerhalb des Kessels befindlichen Raum bis zur Freilegung des an der tiefsten Stelle positionierten Sensors (14) erlaubt.

2. Einrichtung nach Anspruch 1,
dadurch gekennzeichnet,
daß das Entnahmerohr absperrbar ist.

3. Einrichtung nach Anspruch 1 oder 2,
dadurch gekennzeichnet,
daß die Absperrung fein regulierbar ist.

4. Einrichtung nach den Ansprüchen 1 - 3,
**dadurch gekennzeichnet,**
daß das Entnahmerohr (20) innerhalb des Gehäuses (11) vorgesehen ist.

5. Einrichtung nach den Ansprüchen 1 - 3,
dadurch gekennzeichnet,
das das Entnahmerohr (20) außerhalb des Gehäuses (11) angeordnet ist.

6. Einrichtung nach den Ansprüchen 1- 5,
dadurch gekennzeichnet,
daß das Entnahmerohr (20) mit einem außerhab des Gehäuses (11) befindlichen Absperrungsventil (21) verbunden ist.

7. Einrichtung nach den Ansprüchen 1 - 5,
dadurch gekennzeichnet,
daß das Entnahmerohr (20) an der außerhalb des Kessels (1) befindlichen Oberseite des Gehäuses (11) befestigt ist.

8. Einrichtung nach den Ansprüchen 1 - 7,
dadurch gekennzeichnet,
daß an der Oberseite des Kessels (1) ein Deckel (18) vorgesehen ist, an dem die Sensoren (12 - 14) und das Entnahmerohr (20) befestigt sind.

9. Einrichtung nach Anspruch 8,
dadurch gekennzeichnet,
daß der Deckel (18) abnehmbar ist.

10. Einrichtung nach den Ansprüchen 1 - 9,
dadurch gekennzeichnet,
daß das untere, im Wasserraum befindliche Ende des Behälters (11) abgeschrägt oder trichterförmig ist.

11. Einrichtung nach den Ansprüchen 1 - 11,
dadurch gekennzeichnet,
daß die Ableitung bzw. das Entnahmerohr (20) mit einer Saugeinrichtung verbunden ist.

12. Einrichtung nach den Ansprüchen 1 - 11,
dadurch gekennzeichnet,
daß pro Gehäuse (11) mehrere Entnahmerohre (20) vorgesehen sind.

13. Verfahren zur Überprüfung der Funktion von Wasserstandsensoren einer Einrichtung zur Überwachung des Wasserstands eines Kessels,
dadurch gekennzeichnet,
daß über eine Ableitung oder ein Entnahmerohr (20), deren bzw. dessen untere Öffnung unterhalb der Position des untersten Sensors (14) angeordnet ist, eine Verbindung mit einem Raum mit geringerem Druck hergestellt wird, wodurch Wasser in die Ableitung bzw. das Entnahmerohr aufsteigt und der Wasserspiegel in dem Gehäuse der Einrichtung sich im Vergleich zum Wasserspiegel A im Wasserreservoir senkt, bis der unterste Sensor (14) sich nicht mehr unter Wasser befindet, anschließend die Funktionsfähigkeit des Sensors bzw. der Sensoren unter Verwendung bekannter Maßnahmen geprüft wird sowie darauffolgend die Verbindung geschlossen wird, woraufhin der aktuelle Wasserspiegel der Einrichtung im Gehäuse allmählich in den im Kessel (11) vorherrschenden Wasserspiegel A übergeht.

14. Verfahren nach Anspruch 11,
dadurch gekennzeichnet,
daß das Herstellen bzw. Schließen der Verbindung manuell erfolgt.

15. Verfahren nach Anspruch 13,
dadurch gekennzeichnet,
daß das Herstellen bzw. Schließen der Verbindung mittels einer Zeitsteuerung erfolgt.

16. Kessel zur Erzeugung von Dampf, Heiß- oder Warmwasser mit einer Feuerung oder Elektrobeheizung oder Abgasbeheizung, einem Wärmetauscher zur Übertragung -der thermischen Energie des Rauchgases auf das Wasser sowie einem Wasserreservoir,
gekennzeichnet durch
eine Einrichtung zur Überwachung des Wasserstands im Wasserreservoir (7) gemäß mindestens einem der Ansprüche 1 - 12.

## Claims

1. Device for monitoring the water level of a boiler, with a housing, which is to be disposed in the water tank of the boiler and which has at least one inlet opening, with several water sensitive sensors, disposed in the housing at different heights inside the housing, which are connected to a control,
wherein
an extraction pipe (20) is provided, the lower opening of which is located below the position of the lowest sensor (14), which enables the separation of the water in the housing (11), in a space which is outside of the boiler, until the release of the (14) sensor (14) which is placed in the lowest position.

2. Device in accordance with claim 1,
wherein
the extraction pipe can be shut off.

3. Device in accordance with claim 1 or 2,
wherein
the shutting-off can be finely adjusted.

4. Device in accordance with claims 1 to 3,
wherein
the extraction pipe (20) is provided inside the housing (11).

5. Device in accordance with claims 1 to 3,
wherein
the extraction pipe (20) is disposed outside of the housing (11).

6. Device in accordance with claims 1 to 5,
wherein
the extraction pipe (20) is connected to the shut-off valve (21) which is located outside the housing (11).

7. Device in accordance with claims 1 to 5,
wherein
the extraction pipe (20) is attached to upper side of the housing (11) on the outside of the boiler (1).

8. Device in accordance with claims 1 to 7,
wherein
a cover (18) is provided, on which the sensors (12 - 14) and the extraction pipe are attached, on the upper side of the boiler (1).

9. Device in accordance with claim 8,
wherein
the cover (18) can be removed.

10. Device in accordance with claims 1 to 9,
wherein
the lower end of the container (11), which is positioned in the water space, is inclined or is funnel-shaped.

11. Device in accordance with claims 1 to 11,
wherein
the outlet or extraction pipe (20) is connected to a suction device.

12. Device in accordance with claims 1 to 11,
wherein
several extraction pipes (20) are provided per housing (11).

13. Process for monitoring the functioning of water level sensors or a device for monitoring the water-level of a boiler,
wherein
a connection with a space with low pressure is produced above an outlet or an extraction pipe (20), the lower opening of which is disposed below the position of the lowest sensor (14), such that water rises in the outlet or extraction pipe and the surface of the water in the housing of the device falls in relation to the surface of the water A in the water tank, until the lowest sensor (14) is no longer covered by water, then the sensor's or sensors' capacity to function is tested using known measures and the connection is then closed, whereupon the surface of the water in the housing of the device gradually rises above the water level (A) prevailing in the boiler (11).

14. Process in accordance with claim 11,
wherein
the production or closure of the connection is effected manually.

15. Process in accordance with claim 13,
wherein
the production or closure of the connection occurs by means of a time control.

16. Boiler, for producing steam or hot-or warm water, with firing or electrical heating or exhaust-gas heating, a heat-exchanger for transmitting the thermal energy of the fumes to the water, and a water container,
wherein
there is a device for monitoring the water level in the water container (7) in accordance with one of claims 1 to 12.

## Revendications

1. Dispositif de surveillance du niveau d'eau d'une chaudière, comportant un boîtier à disposer dans le réservoir d'eau de la chaudière et présentant au moins un orifice de passage, plusieurs capteurs sensibles à l'eau disposés dans le boîtier à des hauteurs différentes au sein du boîtier et reliés à une commande, caractérisé en ce qu'est prévu un tube de soutirage (20) dont l'orifice inférieur se trouve en dessous de la position du capteur le plus bas (14) et qui permet de retirer l'eau se trouvant dans le boîtier (11) dans une chambre se trouvant à l'extérieur de la chaudière, jusqu'au dégagement du capteur (14) positionné à l'emplacement le plus bas.

2. Dispositif selon la revendication 1, caractérisé en ce que le tube de soutirage est obturable.

3. Dispositif selon la revendication 1 ou 2, caractérisé en ce que l'obturation est susceptible de réglage fin.

4. Dispositif selon les revendications 1 à 3, caractérisé en ce que le tube de soutirage (20) est prévu à l'intérieur du boîtier (11).

5. Dispositif selon les revendications 1 à 3, caractérisé en ce que le tube de soutirage (20) est disposé à l'extérieur du boîtier (11).

6. Dispositif selon les revendications 1 à 5, caractérisé en ce que le tube de soutirage (20) est raccordé à une soupape d'arrêt (21) se trouvant à l'extérieur du boîtier (11).

7. Dispositif selon les revendications 1 à 5, caractérisé en ce que le tube de soutirage (20) est fixé à la face supérieure du boîtier (11) se trouvant à l'extérieur de la chaudière (1).

8. Dispositif selon les revendications 1 à 7, caractérisé en ce qu'est prévu sur la face supérieure de la chaudière (1) un couvercle (18) auxquels sont fixés les capteurs (12 à 14) et le tube de soutirage (20).

9. Dispositif selon la revendication 8, caractérisé en ce que le couvercle (18) est amovible.

10. Dispositif selon les revendications 1 à 9, caractérisé en ce que l'extrémité inférieure du récipient (11), se trouvant dans le réservoir d'eau, est biseautée ou en forme d'entonnoir.

11. Dispositif selon les revendications 1 à 10, caractérisé en ce que la dérivation ou le tube de soutirage (20) est raccordé à un dispositif d'aspiration.

12. Dispositif selon les revendications 1 à 11, caractérisé en ce que sont prévus plusieurs tubes de soutirage (20) par boîtier (11).

13. Dispositif de surveillance du fonctionnement de capteurs de niveau d'eau d'un dispositif de surveillance du niveau d'eau d'une chaudière, caractérisé en ce qu'une communication avec une chambre sous pression plus faible est établie par l'intermédiaire d'une dérivation ou d'un tube de soutirage (20) dont l'orifice inférieur est disposé en dessous de la position du capteur le plus bas (14), de sorte que l'eau monte dans la dérivation ou le tube de soutirage et que le niveau d'eau dans le boîtier du dispositif s'abaisse par comparaison au niveau d'eau A dans le réservoir d'eau, jusqu'à ce que le capteur inférieur (14) ne se trouve plus sous l'eau, qu'on vérifie ensuite la capacité de fonctionnement du capteur ou des capteurs en recourant à des mesures connues et qu'on forme ensuite la communication, après quoi le niveau réel d'eau dans le boîtier du dispositif revient peu à peu au niveau d'eau A régnant dans la chaudière (11).

14. Dispositif selon la revendication 13, caractérisé en ce que l'établissement ou la fermeture de la communication s'effectuent manuellement.

15. Dispositif selon la revendication 13, caractérisé en ce que l'établissement ou la fermeture de la communication s'effectuent au moyen d'une commande de synchronisation.

16. Chaudière de production de vapeur, d'eau bouillante ou d'eau chaude, comportant un dispositif de chauffe ou un chauffage électrique ou un chauffage par gaz brûlés, un échangeur de chaleur destiné à transférer l'énergie thermique des gaz de combustion à l'eau ainsi qu'un réservoir d'eau, caractérisée par un dispositif de surveillance du niveau d'eau dans le réservoir d'eau (7) selon au moins une des revendications 1 à 12.
